(19) Europäisches Patentamt
European Patent Office
Office européen des brevets

(11) **EP 2 083 385 A1**

(12) **EUROPEAN PATENT APPLICATION**

(43) Date of publication:
**29.07.2009 Bulletin 2009/31**

(51) Int Cl.:
***G06Q 30/00*** *(2006.01)*

(21) Application number: **08290033.3**

(22) Date of filing: **15.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **MOTOROLA, INC.**
**Schaumburg, IL 60196 (US)**

(72) Inventors:
• **Picault, Jerome**
  **75014 Paris (FR)**
• **Ribiere, Myriam**
  **91620 Nozay XX (FR)**

(74) Representative: **Cross, Rupert Edward Blount**
**Boult Wade Tennant**
**Verulam Gardens**
**70 Gray's Inn Road**
**London WC1X 8BT (GB)**

(54) **Method of adapting a user profile including user preferences and communication device**

(57)     A method of adapting a user profile including user preferences, the user preferences being associated with concepts of interest to an user, is disclosed. The method comprises calculating (502) a concept parameter for each concept in information provided to a user, the concept parameter relating to the number of occurrences of the concept in the provided information over a predetermined period of time, and adapting (504) the user profile for the user based on the calculated concept parameters. Adapting may include adding or removing a user preference, leaving a user preference unchanged or calculating a weight of a user preference in the user profile based on the calculated concept parameter for the concept associated with the user preference.

FIG. 5

**Description**

Field of the Disclosure

This disclosure relates to a method of adapting a user profile including user preferences and a communication device.

Background of the Disclosure

In view of the significant increase in information available to a user, for example via the internet, information retrieval systems have been developed which include mechanisms which aim at providing users with information that is in accordance with their interests. Such automated mechanisms are commonly referred to as personalisation techniques. For example, personalised retrieval systems retrieve information with respect to users' individual preferences. As personalised systems aim to provide information based on user preferences, user modelling techniques are required in order to define the user preferences which go to make up a user profile. The user profile is then used to filter the information to be delivered to the user.

Modelling techniques, such as machine learning methods, have been used to provide user profiles. The user profiles may be acquired from explicit user expression of preferences and interests, from previous user activity and also from inferred preference data such as that generated by data mining, reasoning and/or inference from users with related interests and preferences. The user preferences in the user profile may indicate the topics or concepts in which the user is interested, the preferred language, preferred media format, preferred content genre (e.g. comedy, drama), specific people and named entities of interest (e.g. favourite actor, favourite football team), specific dislikes (e.g. never watches soap operas), time of day related preferences (e.g. always watches the news after 6:00pm), type of information preferred (e.g. short video clips rather than long TV programmes).

As a user's interest changes with time, the user profile should be adapted accordingly so that information relevant to the user's new interests can be delivered. Thus, user profile adaptation methods are required that can detect shifts or changes of interests, which changes may occur slowly or rapidly, and can then adapt the user profile accordingly. Rapid or fast emerging changes in the behaviour of users may lead to the appearance of new long-term interests, or disappear as fast as they appear. Shift (or changes) of interest may occur for many reasons such as professional change, or any other kind of sociological evolution, or due to external events (e.g. rapid changes due to interest in Government elections or in the Olympics). If undetected over a long time, such abrupt interest changes may result in significant degradation in the quality of the filtering of information and loss of satisfaction among users during the period of non-detection. Furthermore, if the user profile is adapted too early, the "new" interests may not be relevant enough from the user's point of view but if the user profile is adapted too late, the "new" interests may already be obsolete.

This problem of detecting and accounting for shifts or changes in user interests has been considered for many years. For example, in an article entitled 'A Hybrid User Model for News Story Classification', by D. Billsus and M. J. Pazzani, Proceedings of the 7th International Conference on User Modeling, Springer-Verlag, pp. 99-108, 1999, a hybrid user model is described consisting of both a short-term and long-term model of the user's interests. The method employs the short-term interests first (based on most recent observations). If news cannot be classified with the short-term model, the long-term model is used. This model introduces a clear separation between the different kinds of preferences, but lacks flexibility, as there is no direct impact on one type of preference on the other one.

In an article entitled 'User Modeling for Full-Text Federated Search in Peer-to-Peer Networks', by J. Lu and J. Callan, in proceedings of SIGIR '06, August 6-10 2006, Seattle, Washington, USA, the approach for user modeling is to use clusters of past user queries to infer long-term user preferences. Each cluster is associated to a time stamp and infrequently used clusters are removed from the set of clusters in order to effectively model the user interests. This approach of using a time decay factor may be relevant for long-time evolution of preferences, however, this method cannot handle quick changes of interest which occur in a short time frame and so is not appropriate enough for rapid evolution of preferences that will remain undetected (or over-detected). Furthermore, since the method in this article takes into account all user queries, there may be practical issues in terms of storage or computation resources should this method be used for a lifelong user profile adaptation. Lifelong user profile adaptation is a term used to refer to the adaptation of the user interests of applications that the user is going to use during a long period of time (typically several years or even a user's lifetime).

In another article entitled 'Time Weight Collaborative Filtering' by Yi Ding and Xue Li, Proceedings of the 14th ACM International Conference on Information and knowledge management, 2005 http://delivery.acm.org/10.1145/1100000/1099689/p485-ding.pdf, a collaborative filtering system is described where it is considered that an item that was rated recently by a user should have a bigger impact on the prediction of future user behaviour than an item that was rated a long time ago. In this paper, the authors present an algorithm to compute the time weights for different items in a manner that will assign a decreasing weight to old data. This system uses the full users purchase history to compute a recommendation or user preference, and applies a decay factor that is a time function, to the user feedback. The method in this paper only provides means for adaptation to long-term changes of user behaviours and not to short-term changes.

There is therefore a need for an improved method of adapting a user profile in an efficient manner across different usage patterns, including fast and slow changes in user interests.

Summary of the Disclosure

In accordance with the disclosure, there is provided a method of adapting a user profile including user preferences and a communication device as recited in the accompanying claims.

Brief Description of the Drawings

A method of adapting a user profile including user preferences and a communication device, in accordance with the disclosure will now be described, by way of example only, with reference to the accompanying drawings in which:

FIG. 1 is a block schematic diagram of a communication system;
FIG. 2 is a block schematic diagram of a wireless device in accordance with an embodiment of the disclosure; and
FIG. 3 is a simplified representation of a personalisation system for acquiring, adapting and using user profiles in accordance with an embodiment of the disclosure;
FIG. 4 is a simplified schematic presentation of a typical user modelling process;
FIG. 5 is a flow diagram for a method of adapting a user profile in accordance with an embodiment of the disclosure;
FIG. 6 is a graphical representation of the time variation of a concept parameter Pc relating to the consumption of content Nocc for a concept in accordance with an embodiment of the disclosure and which illustrates a gradual forgetting of the concept;
FIG. 7 is a graphical representation of the time variation of a concept parameter Pc relating to the consumption of content Nocc for a concept in accordance with an embodiment of the disclosure and which illustrates a constant persistence of the concept;
FIG. 8 is a graphical representation of the time variation of a concept parameter Pc relating to the consumption of content Nocc for a concept and including threshold values for insertion/removal of a user preference in accordance with an embodiment of the disclosure;
FIG. 9 is a graphical representation of the variation of concept weight calculated with a known formula for a shift in interest confirmed over time;
FIG. 10 is a graphical representation of the variation of concept weight calculated with a known formula for a temporary shift in interest;
FIG. 11 is a graphical representation of the variation of a calculated concept parameter computed on one update period in accordance with an embodiment of the disclosure;
FIG. 12 is a graphical representation of the variation of a calculated concept parameter computed on two update periods in accordance with an embodiment of the disclosure;
FIG. 13 is a graphical representation of the variation of concept weight calculated using the concept parameter in accordance with an embodiment of the disclosure for a shift in interest confirmed over time; and
FIG. 14 is a graphical representation of the variation of concept weight calculated using the concept parameter in accordance with an embodiment of the disclosure for a temporary shift in interest.

Detailed Description of the Drawings

In the following description, embodiments of the disclosure will be described with respect to a user terminal arranged to receive information based on user preferences comprising a wireless device operating within one or more wireless communication networks, such as a 2nd generation cellular communication system known as the Global System for Mobile communication (GSM) with General Packet Radio System (GPRS) capability, a 3rd generation cellular communication system such as an Universal Mobile Telecommunication system (UMTS), or Long Term Evolution (LTE) communication system. However, it will be appreciated that the disclosure may also be used with user terminals other than wireless devices, such as set top boxes, computers or similar wired devices.

Furthermore, the embodiments of the disclosure will be described with reference to providing personalised information based on user preferences in a user profile in the news domain but it will be appreciated that the disclosure may apply to any domains for which personalisation is desired. Examples of other domains include sports, politics, targeted advertising, television. The disclosure has particular advantages for use in domains such as more personalised domains e,g, a particular politician, singer, football player, specific area of medicine etc. that may be particularly dynamic and in which the user does not typically follow a routine. In such dynamic domains, the users interest are likely to change frequently. The disclosure also has particular advantages in the case when content is pushed to the user as for example in targeted advertising (as opposed to the personalised poll situation when a user sends a search query to search for information himself). In personalised push systems, there is a greater need to ensure that that the information pushed to a user is in line with the users interest since the impact of a bad recommendation (i.e. information is sent that is not relevant to the user's interests) may affect the user's confidence in the system.

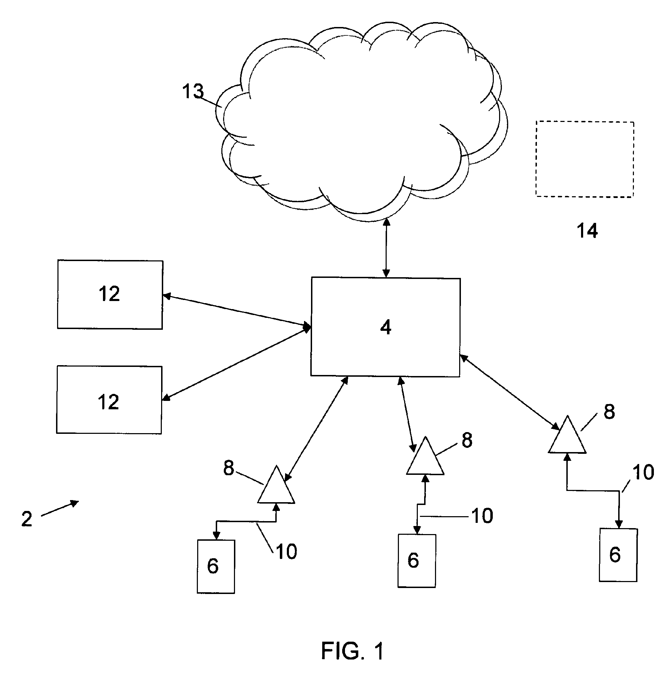

Referring firstly to FIG. 1, a communication system 2 comprises one or more communications networks, only one 4 of which is shown in FIG. 1, communicating with wireless devices 6 via radio communication links 10 between the wireless devices 6 and transceivers 8. The transceivers 8 are part of the one or more communication networks and a single transceiver 8 may support one or more communication networks. In a UMTS communication network, the transceivers 8 are base stations.

The communication network 4 comprises interworking functions for interfacing to external communication systems 13, such as the Internet, from which the user of the wireless device 6 can receive information (whether in a push scenario or in response to a user query). In a GPRS network, Gateway GPRS Support Nodes (GGSNs) (not shown), which are operable to route data in the packet based GPRS network, provide the interworking functions. As will be apparent to a skilled person, only those functional components of the communication system 2 that are necessary for an understanding of the invention have been shown and will be described.

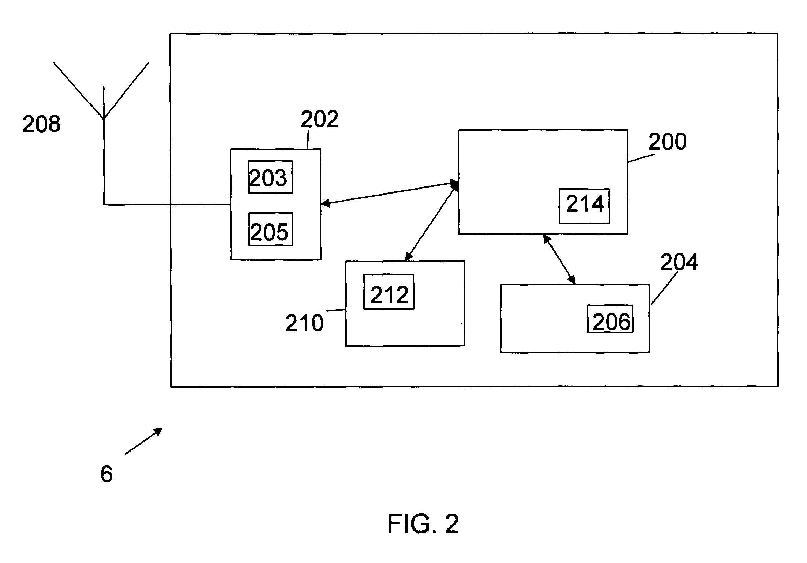

Referring now also to FIG. 2 which is a partial schematic block diagram of an exemplary wireless device 6 in accordance with an embodiment of the disclosure. As will be apparent to a skilled person, only those functional components of the wireless device that are necessary for an understanding of the disclosure have been shown and will be described. The wireless device 6 may be a subscriber unit, a wireless user equipment, a portable or mobile telephone, a wireless video or multimedia device, a communication terminal, a personal digital assistant (PDA), a laptop computer, an embedded communication processor or any communication device operable to communicate over the radio communication links 10.

The wireless device 6 comprises a processing unit 200 for configuration and control of the wireless device 6. The processing unit 200 is communicably coupled to a RF communication unit 202 which typically comprises a receiver 203, transmitter 205 (which may be separate elements or part of a transceiver device), a modulation/demodulation section (not shown), a coding/decoding section (not shown) as is well known in the art, and to a Man Machine Interface (MMI) 204. The MMI 204 includes elements such as a key pad, microphone, speaker, a display 206, for providing an interface between the wireless device 6 and the user of the wireless device 6. Thus, a user uses the MMI 204 in order to input new queries for information, in a training mode to indicate the user's preferences concerning received information and to view on the display 206 personalised information received by the wireless device 6. The RF communication unit 202 is coupled to an antenna 208.

The processing unit 200 may be a single processor or may comprise two or more processors carrying out all processing required for the operation of the wireless device 6. The number of processors and the allocation of processing functions to the processor is a matter of design choice for a skilled person. The wireless device 6 also has a program memory 210 in which is stored programs containing processor instructions for operation of the wireless device 6. The programs may contain a number of different program elements or sub-routines containing processor instructions for a variety of different tasks, for example, for: communicating with the user via the MMI 204; and processing signalling messages received from the transceivers 8. Specific program elements stored in program memory 210 include a search query program element 212 which controls the operation of the wireless device 6 when a user enters a query for information. In the case when content is dynamically pushed to the user, a program element (not shown) would control the wireless device 6 so that the pushed content is presented to the user, for example, displayed on the display 206.

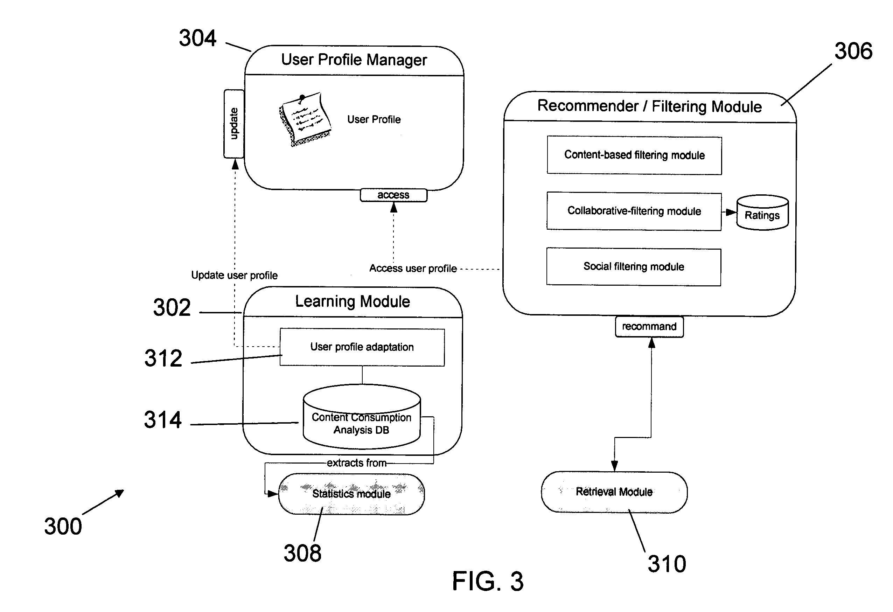

Referring now to FIG. 3 which shows a representation of a personalisation system 300 for acquiring, adapting and using user profiles in accordance with an embodiment of the disclosure.

As discussed in the introduction, user profiles include user preferences with each user preference being associated with a concept or topic of interest to a user. The user preferences comprise data from explicit user expression of preferences and interests, data based on previous user activity and also inferred preference data such as that generated by data mining, reasoning and/or inference from users with related interests and preferences. The user preferences are acquired or generated according to user modelling or learning tools as represented by learning module 302. The user preferences are managed by a user profile manager 304 which may reside in a user profile database represented by box 14 in FIG. 1 in the network part of the communication system 2, for example it may be part of the network 4, or in part of another communication system, such as in a server (not shown) which is part of the internet 13, or may reside in a user profile memory 214 in the wireless device 6. The user profile memory 214 is shown in FIG. 2 as being part of the processing unit 200 but may be separate to the processing unit 200. The location of the user profile manager 304 is arbitrary. However, in very distributed arrangements, for privacy reasons it may be desirable to store a user profile for a user on the user's wireless device. The user profile manager 304 takes care of handling, and storing of the user profile.

A retrieval module 310 is the main point of interaction with the user: it is the interface with the user in the case of personalised search during which a user via search query program element 212 initiates a search query for information or the module that selects information on behalf of the user in the case of a push system. This module is not strictly part of the personalisation system, but strongly interacts with it.

A statistics module 308 gathers all possible information about the user, such as content or information consumed or accessed by the user (including identifier of content consumed, date and time of consumption), set of user actions such as play, stop, pause, volume, scroll, seek, etc., the time the user spent on the content, etc. The statistics module may gather a huge amount of user data, however only a subset of the gathered user data may be relevant for the purpose of user profile adaptation.

A recommender module 306 which interacts with the retrieval module 310 and the user profile manager 304, determines or filters recommendations of content based on user preferences. This computation can be done according to different techniques such as content-based filtering techniques, semantic-based filtering techniques or collaborative filtering techniques or a combination of these last two techniques, all of which are well known in the art.

A user profile adaptation module 312 is in charge of updating the user profile. For example, the user profile adaptation module 312 may update preferences weights according to the consumed content. For that purpose, the module makes use of a Content Consumption Analysis (CCA) database 314 that retrieves from the statistics module 308 the consumption elements that are relevant for the needs of user profile adaptation.

It will be appreciated that each of the modules 302-314 shown in FIG. 3 may be implemented separately or with one or more of the other modules anywhere in a system such as that of FIG. 1.

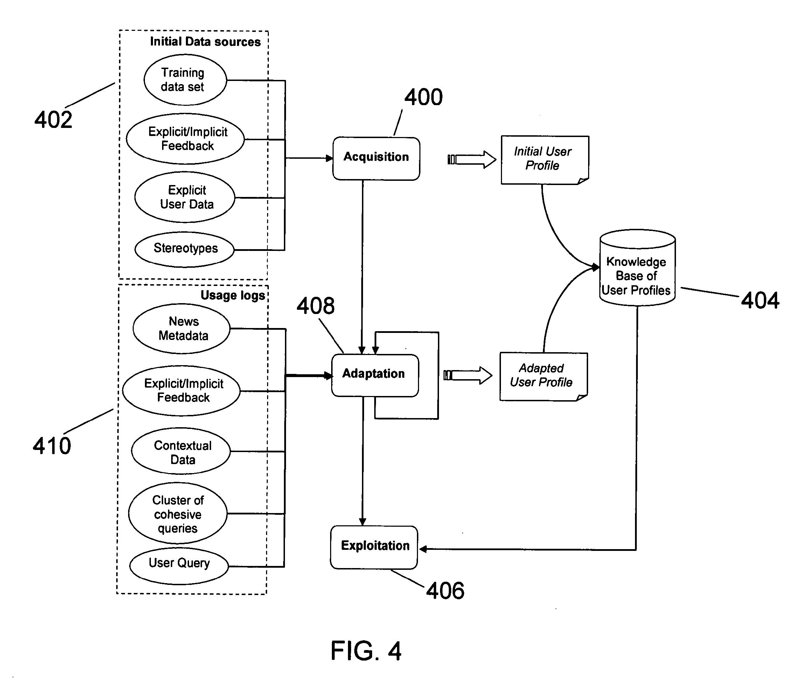

FIG. 4 shows a typical user modelling process. User preferences are first acquired, box 400, from initial data sources 402, such as a training data set, feedback, explicit user data, stereotypes, and an initial user profile is provided to the user profile manager 304 and held typically in a knowledge base 404 of user profiles. The initial user profile is then used by the recommender module 306 to provide information or content to the user based on the user preferences in the initial user profile for the user, box 406. A user profile is adapted, box 408, by user profile adaptation module 312 using data such as the usage logs 410 including news metadata, feedback, contextual data, cluster of cohesive queries, user query. The adapted user profile is provided to the user profile manager 304 so that the user profiles can be updated. The data sources 402 and usage logs 410 are collected in the CCA database 314.

In an embodiment of the disclosure, the user profile adaptation process is performed when the user is not using the system (i.e. done off-line) so that this adaptation process is de-correlated from the user's activity. It could be triggered for example during the night and so every 24 hours. Ideally, the frequency at which the user profile adaptation process is triggered should depend on each user, depending on how often they are using the system, how much content they consume, etc. In an embodiment, it is assumed that the user profile adaptation process is triggered periodically, the period being the same for all the users.

When triggered, a session of the user profile adaptation process is composed of two main sub-processes: (1) insertion/removal of concepts in the user profile, and (2) update of concept weights in the user profile. Both sub-processes (1) and (2) are using the data sources 402, 410 described in FIG. 4, that are collected inside the CCA database 314. Then, the following algorithm is applied:

For each line in the CCA database, and for each concept related to a content item:

```
        If the concept does not already exist in the user
profile, in the detected situation then
            Apply process "Insertion/removal of concepts
in the user profile".
        Else
```

Apply process "Update concept weight", for example according to well known formulas for calculating the weight of a concept.

As discussed above in the introduction, different user profile adaptation processes have been developed in order to account for changes in users interest but none of the known processes can handle efficiently and satisfactorily different usage patterns which characterise different evolutions of the user's interests, such as rapid and slow changes in user interests, persistent interests, and periodic interests.

Rapid or fast changing preferences may be characterised by an increase or decrease of consumption of content relating to the considered concept during one update period which increase/decrease exceeds a predetermined threshold. An update period is the average delay between triggering of the user profile adaptation mechanism. This threshold can be determined empirically. e.g. from the average content consumption about that concept, computed over several update periods. So, as an example, if the user consumes say 3 articles about sport on day 1, then 4 on day 2, 5 on day 3, 4 on day 4, this could not be considered as a fast change in user preference. If a user consumes 3 on day 1, 10 on day 2, 40 on day 3 and then 5 on day 4, this could be considered as a fast change in user preference.

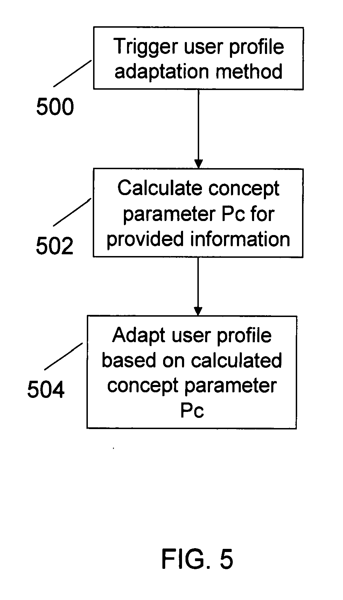

A method of adapting a user profile including user preferences in accordance with an embodiment of the present disclosure will now be described with reference to FIG. 5. The user preferences in an user profile are associated with concepts or topics of interest to an user. The user is provided with information relating to at least one concept. The information may be provided in response to a user query or may be provided by the system according to a push operation. In other words, the provided information is information that is consumed or accessed by the user and is sometimes referred to as consumed content. In response to a triggering event, for example, a periodic trigger as discussed above, the user profile adaptation method in accordance with an embodiment of the disclosure is triggered, step 500. A concept parameter Pc for each concept in information provided to an user is calculated, step 502. The concept parameter relates to the number of occurrences of the concept in the provided information over a predetermined period of time. The predetermined period of time is determined by when the user profile adaptation process is triggered and the calculation of the concept parameter is performed. The user profile is then adapted based on the calculated concept parameters, step 504. This method may be performed by the user profile adaptation module 312 using data on the information provided to the user collected and analysed in the CCA database 314. The user profile adaptation module 312 may be implemented in any device which is part of the system shown in FIG. 1. For example, the user profile adaptation module 312 may be implemented in the wireless device 6 or in a server which is part of the network 4 or part of another communication system such as the internet 13.

Each line of the CCA database 314 describes the information related to one consumed content, for example:

a list of weighted metadata describing the content;
the "situation" of the user which is a parameter giving contextual information but which may or may not be included in the CCA database 314;
the date/time of consumption of this content piece;
the length of the content;
the time the user spent on the content;
the implicit feedback; and
the rating of content as returned by the recommender module.

In an embodiment, the concept parameter Pc is calculated, when the adaptation process is triggered, according to the following equation:

$$P_c = N_{occ_c} \big/ (D - d_c) \qquad\qquad (1)$$

Where:

$N_{occ}$ is the number of occurrences of the concept in the provided information (consumed content);
D is the time at which the user profile adaptation method is triggered;
dc is the date of first appearance of the concept as a potential interest to the user.

In the method in accordance with the disclosure, the analysis of the consumed content for a user helps determine from the content annotations which concepts appear and how often they occur during a period. In an embodiment, a record known as the "concept history stack" is implemented in the CCA database 314 as a mechanism to keep track of all concepts of potential interest to a user and to detect if a concept is confirmed as a persistent interest over time and can be considered as a user preference. It is assumed that there exists a correlation between the recurrence of a concept in consumed content and the fact that it represents a user preference. Thus, the history stack record contains all the concepts that are currently in use in the profile as user preferences and all concept candidates which may in time become part of the user profile preferences.

An object in the history stack record corresponds to a particular concept and represents the user's level of interest in that concept. An object may be described by the following properties:

the concept URI which is an unique identifier of a concept;
the situation which is a parameter indicating some contextual information;
the number of occurrences of the concept in the consumed content $N_{occ}$;
the date of first appearance of the concept dc.

The data in the history stack record is used to calculate the concept parameter Pc when the adaptation process is triggered.

The computation of Pc is naturally reflecting a decay factor - or gradual forgetting of preferences - since the occurrence of a concept is divided by the age of the concept in the history stack record (i.e. D-dc). However, since the concept parameter depends on the number of occurrences of the concept, it is not based solely on time and can be used to reflect changes in interests of the user, including rapid changes in interests.

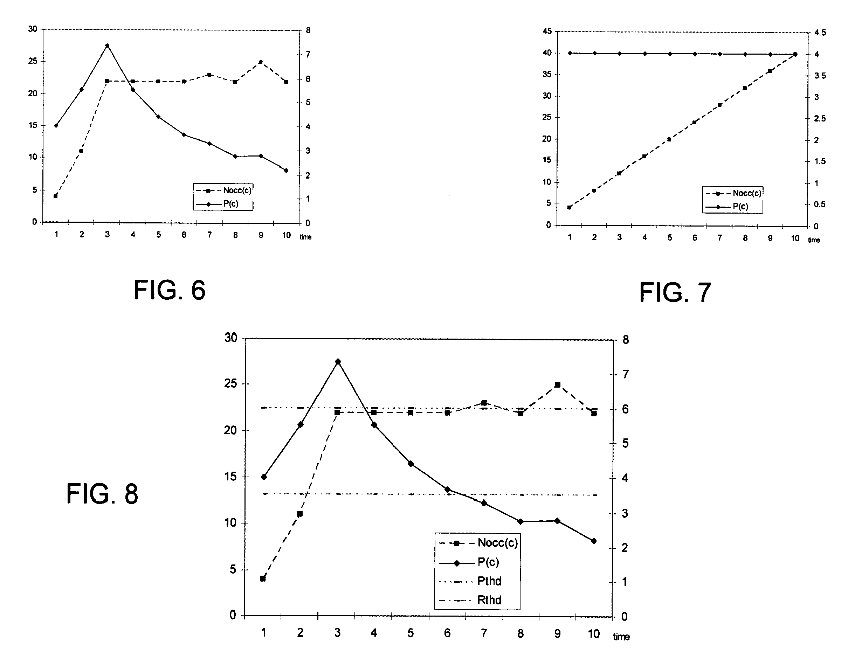

FIG. 6 is a graphical representation of gradual forgetting of a concept. This may apply, for example, during the Olympic games, when a user may be more interested in receiving news items concerning sport. Since the user will be accessing or consuming sport information more frequently over a short period of time during which the Olympics is on, period 1-3, the Pc value for the sport concept will be high for that period and will then decay rapidly once the Olympics has finished because the number of occurrences remains roughly the same. FIG. 7 is a graphical representation of a constant persistence of a concept over time. This may apply, for example, to the situation when a user becomes interested in a football team and wants to receive news items relating to the football team and the user remains interested to the same degree for some time.

The value of the calculated concept parameter is used in the determination of how to adapt the user profile for the user if at all. This concept parameter, is not impacting directly the weight of the user preferences so that the weight of a concept still reflects the real user consumption of content.

The following scenarios have to be taken into account in the proposed mechanism:

A concept occurs once and its number of occurrences is confirmed over time with roughly the same level - this concept can be introduced after a period as a long-term preference of the user - this reflects a persistent interest of the user.

A concept occurs once and its occurrence is very high over a short period, and then disappears very quickly. Even if this concept can be considered as a preference during the short period of time, it must be removed very fast from the user preferences, once the interest is over - this reflects a rapid shift in interest of the user or a periodic interest.

A concept occurs once but the persistence value is not very high and even if confirmed in time, it does not constitute a significant interest for the user. In that case, this concept will never become a user preference.

A concept occurs and becomes a user preference as in the first case, but disappears with time. It must at a certain time be removed from the user preferences (FIG. 6).

Thus, to take account of the above scenarios the method of adapting a user profile in accordance with an embodiment of the invention uses the calculated concept parameter to adapt the user profile by adding user preferences or removing user preferences or leaving unchanged user preferences or calculating a weight of a user preference in the user profile as follows.

A threshold value $P_{thd}$ is defined for the concept parameter Pc. When the calculated concept parameter Pc of a concept is greater than the threshold value $P_{thd}$, the concept, which is a candidate in the history stack record, is added as a user preference to the user profile. This threshold value $P_{thd}$ will be evaluated empirically. Thus, a sudden high consumption of a content relating to a concept, will result in a high value of Pc so that a user preference associated with the concept will be added quickly to the user profile.

In an embodiment, the concept weight of the new user preference in the user profile is initialised to a middle value (for example 0.5 for a preference weight).

The removal of a user preference associated with a concept from the user profile can rely on one or both of two mechanisms. In the first mechanism, a user profile is defined to have a predetermined size limit for holding user preferences. When a new user preference is to be added to the user profile and the size limit has been reached, the user preference having a concept parameter with the lowest value is removed and the new user preference added. Since concept parameters Pc of low value indicate low consumption of content relating to the concept, this indicates that the user is less interested in this concept and so the user preference can be removed without impacting negatively the recommendations of the personalised delivery system.

In the second mechanism a threshold value $R_{thd}$ is defined for the concept parameter Pc. When the calculated concept parameter Pc of a concept is less than the threshold value $R_{thd}$, the user preference associated with that concept is removed from the user profile.

These two mechanisms can be used separately or combined. FIG. 8 is a graphical representation showing examples of threshold values Pthd, Rthd for a calculated concept parameter Pc in an example situation.

Since concept parameters Pc of low value indicate low consumption of content relating to the concept, this indicates that the user is less interested in this concept and so the user preference can be removed without impacting negatively the recommendations of the personalised delivery system.

As discussed above, the adaptation of user preferences in the user profile does not only consist in adding or removing preferences or leaving the preferences unchanged, but also in updating the concept weights of user preferences in the user profile, based on the analysis of consumed content as indicated by the concept parameter Pc. Advantages of modifying the concept weight are discussed below.

Concept weights are used to ensure the long-term adaptation of the user profile in line with changes in user interests. Formulas for calculating concept weight are well known. A new mathematical model, inspired by the work performed by Waddington, Bratu, Papadogiorgaki, Papastathis, Nidelkou & Kompatsiaris which work is described in a patent application entitled 'A content recommendation system and a method of operation therefor', filed on 12 November 2006 (Motorola reference CML04233EV), is equation (2) as set out below:

$$w_{new} = w_{old} + fd * ContentRating * e^{-\beta * x * y} * \log \frac{time}{length}$$

$$(2)$$

Where:

$w_{old}$ is a factor representing the current weight of the concept or topic associated with the user preference;
fd is the relevance feedback factor given through an analysis of the content consumption, the relevance feedback can take either Boolean value or be multi-valued;
ContentRating is the rank assigned to the content by the personalised retrieval system (when the content has not been recommended, but has been explicitly selected by the user, this value can be set to 1); it can use a cosine similarity measure between the content and the user profile, or any other measure implemented to rank content;

$\log \dfrac{time}{length}$ is an element incorporating the time spent reading or watching a news item in seconds and the length of the content in seconds, which operates as the normalizing factor;
$e^{-\beta x * y}$ is a factor which is used to follow the personalised non-linear change of the concept's weight according to user usage history data;
$x$ represents the mean number of content that the user is consuming per update period;
$y$ represents the number of consumed content where the concept appears in the set of metadata. The weight of the concept increases faster if the proportion of consumed content associated to that concept increases in average;
$\beta$ is a positive constant, which may take different values in the two opposite scenarios of positive/negative implicit feedback. In the case of negative feedback, the value should be lower, as a negative implicit feedback should impact more deeply the weight (in particular if the content rating value was high).

In order to determine the impact of a shift of interest, which may occur with a rapid change of content consumption associated with a concept, on the concept weights of user preferences associated with the concept as calculated by equation (2), two cases may be studied:

1. The impact on a user preference which is already in the user profile, and it is assumed that the user preference is already in the user profile with a weight which may be low or high;
2. The impact for concepts that were not yet introduced as user preferences in the user profile.

A simple simulation allows to observe what happens for these two cases when:

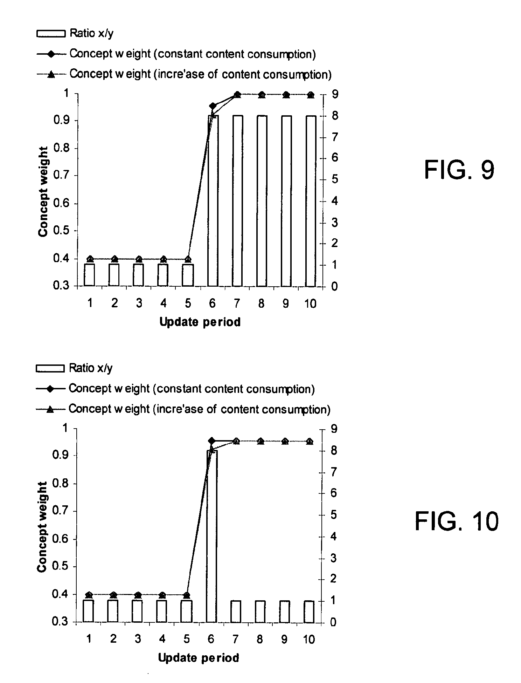

- the number of occurrences of a concept increases suddenly during a short time frame (this should correspond to the sudden interest for a new concept or for a concept which importance was low beforehand). This rapid increase of concept consumption can be confirmed with time or not. In addition, the rapid growth of this new concept can be at constant volume of consumption (which means that this new concept replaces other ones) or can increase the overall volume of content consumption. This is shown in FIGs. 9 and 10; and
- the number of occurrences of a concept decreases suddenly during a short time period (this can be the case for example for a short high interest in elections). This is shown in FIG. 10.

This simple simulation shows that the model reacts quite well in a shift of interest which is confirmed in time: in case of rapid increase of concept consumption during one update period, the weight of the concept increases rapidly too. However, if this increase of concept consumption is not confirmed with time (or if there is a sudden decrease of consumption of a concept that was high), the weight of the concept in the user profile remains too high and does not decrease unless there is some negative implicit feedback. This phenomenon is due to the fact that once a concept has been introduced as a user preference (because it was exceeding the concept parameter threshold value $P_{thd}$ in the concept history stack), the evolution of weight is not submitted to any decay factor based on the variation of consumption. Basically, this means that if no new concept is consumed, its weight in the user profile will remain constant (which is not good as it may generate recommendations about this concept), but its concept parameter value will decrease. At a given point of time, this user preference will be removed, because the concept parameter value will be too low, but this will be sudden, which is not appropriate either.

Thus, it is desirable that the concept weight be modified to take account of the concept consumption. In an embodiment of the disclosure a 'fast enough' decay factor is added to the concept weight, which may be calculated by equation (2) above or any other formula for calculating concept weight so that very temporary, although high interest, concepts are removed quickly.

In order to detect these rapid modifications of user interests, and assuming there is a correlation between the modification frequency of appearance of a concept and the user interest associated to that concept, a simple approach, based on the concept parameter can be described as follows:

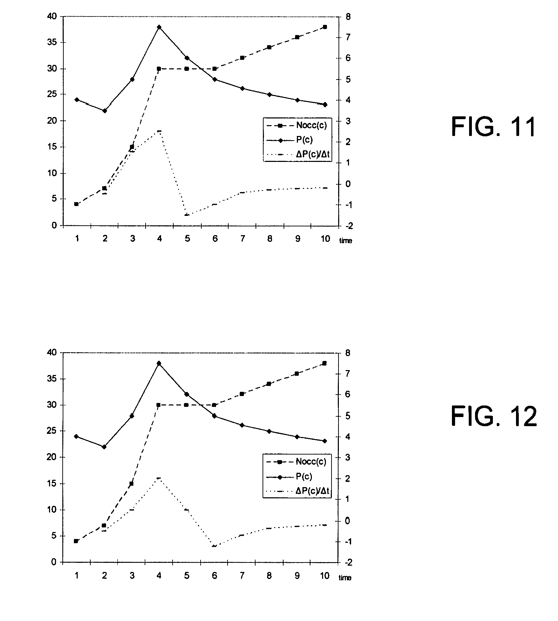

By analysing the variation of the concept parameter Pc over time with reference to FIGs. 11 and 12 with $\dfrac{\Delta Pc}{\Delta t}$ computed at time t gives the local tendency of the evolution of the interest for concept c at time t, the following observations can be made:

if $\dfrac{\Delta Pc}{\Delta t} \approx 0$ the user interest for concept c tends to be stable during the time window (local optimum);

if $\dfrac{\Delta Pc}{\Delta t} > 0$ the user interest for concept c tends to increase during the period; and

if $\dfrac{\Delta Pc}{\Delta t} < 0$ the user interest for concept c tends to decrease during the period.

FIG. 11 represents the interest shift given by the variation of the concept parameter Pc computed on one update period and FIG. 12 represents the interest shift given by the variation of the concept parameter Pc computed on one update period: that is the period between triggering of the profile adaptation method. For example, if the time between triggering of the profile adaptation method is one day, one update period is one day and two update periods is two days etc.

The time window chosen for computing the variation of the concept parameter would be the minimal time required to detect a shift of interest. So, the choice of Δt enables to choose the precision of detection of shifts of interest.

The intensity of interest shift is determined by the amplitude of variation of $\dfrac{\Delta Pc}{\Delta t}$. A real shift of interest happens when $\dfrac{\Delta Pc}{\Delta t} \gg 0$ or when $\dfrac{\Delta Pc}{\Delta t} \ll 0$.

The detection of such a shift of interest can thus be used to adapt the concept weight, as a means to make the concept decrease faster if the user interest for that concept suddenly disappears.

If this decay factor $\dfrac{\Delta Pc}{\Delta t}$ based on the concept parameter is added to the concept weight formula of equation (2), the formula becomes:

$$w'_{new} = w_{new} + \lambda \cdot \frac{\Delta Pc}{\Delta t} = w_{old} + fd * ContentRating * e^{-\beta*x*y} * \log\frac{time}{length} + \lambda \cdot \frac{\Delta Pc}{\Delta t} \quad (3)$$

Where:

λ is a positive constant;

$w_{old}$ is a factor representing the current weight of the concept associated with the user preference;

$W_{new}$ is the concept weight calculated according to equation 2 above;
fd is a relevance feedback factor given through an analysis of content consumption;

ContentRating is the rank assigned to the content; $\log \dfrac{time}{length}$ is an element incorporating the time spent consuming content in seconds and the length of the content in seconds;

$e^{-\beta * x * y}$ is a factor which is used to follow the non-linear change of the concept's weight according to user usage history data;

$x$ represents the mean number of content that the user is consuming per update period;

$y$ represents the number of consumed content;

$\beta$ is a positive constant.

When $\dfrac{\Delta Pc}{\Delta t} < 0$, the content consumption is decreasing rapidly and this is taken account of by equation (3). In the opposite case, the content consumption is increasing, so the user consumes more and more content described by the considered concept. So, implicit feedback (positive or negative) is computed; in the case of real interest, this will certainly be positive feedback, so the weight of that concept in the user profile tends to increase (according to formula (2)). In the case of $\dfrac{\Delta Pc}{\Delta t} > 0$, the additional term of formula (3) amplifies the phenomenon. Note that in case

$\dfrac{\Delta Pc}{\Delta t} > 0$, it may not always be required to have this additional amplification of preference variation. The value lambda may take different values (but is still positive) depending if $\dfrac{\Delta Pc}{\Delta t} > 0$ or not. In the case of $\dfrac{\Delta Pc}{\Delta t} > 0$, if

there are a few negative implicit feedback in the consumed content, the last term of formula (3) has the effect of "smoothing" the impact of the negative implicit feedback, resulting in a smaller decrease of the concept weight.

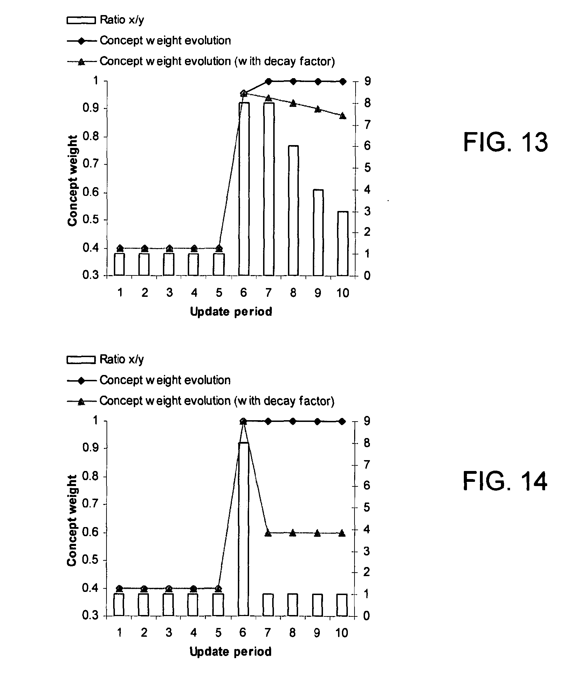

FIGs. 13 and 14 show the impact of equation (3) and more particularly the impact of the decay factor on the shift of interest confirmed over time (FIG. 13) or not (FIG. 14). As can be seen in these FIGs, the behaviour with respect to an interest that appears suddenly and which number of occurrences decreases quickly or to an interest that appears suddenly but which number of occurrences decreases more slowly is much better compared to the behaviour for equation (2) as shown in FIGs. 9 and 10. In other words, by taking account of the concept parameter when determining concept weights, the concept weight can be modified more dynamically and so can better account for rapid changes in user interests.

In summary, the present disclosure uses a concept parameter which is representative of the number of occurrences of the concept in information provided to a user (e.g. consumed content) to adapt the user profile to take better account of different usage patterns of interests of a user which characterize different evolutions of the user's interests, such as persistent interests, periodic interests or shifts of interests and to provide a fast reaction to changing user habits. This can provide the user with an improved experience with content filtering in very dynamic environments where user preferences can evolve quickly.

The method in accordance with the disclosure adapts the user profile based on the calculated concept parameters which can account for short term and long term changes to the user's interest. Since the same method is used across the different evolutions of the user's interest, unlike some of the existing techniques that use different models for long term and short term changes, the method in accordance with the disclosure provides a flexible unified mechanism which avoids gaps between differing models.

In a push/pull mode content filtering system, the method in accordance with the disclosure allows the user to get some follow-up information quickly on new interest(s) or concepts that were acquired in response to a user query (pull mode) by adding new user preferences to the user profile which new user preferences can then be used directly in a push mode.

The method in accordance with the disclosure is storage efficient and does not require significant storage space since the usage log needed in order to calculate the concept parameter are only those of a single update period which is typically one or two days. In addition, the method allows for gradual forgetting of user preferences when content relating to the concepts associated with the user preferences is not consumed. This leaves space for new emerging user preferences.

The method in accordance with the disclosure can be used as a mechanism for lifelong user profile adaptation for use, for example, in adaptive personalised information filtering systems (such as Personalised News, Personalised Information Delivery) or personalized content push systems (such as targeted advertising).

**Claims**

1. A method of adapting a user profile including user preferences, the user preferences being associated with concepts of interest to an user, the method comprising:

   calculating a concept parameter for each concept in information provided to a user, the concept parameter relating to the number of occurrences of the concept in the provided information over a predetermined period of time; and
   adapting the user profile for the user based on the calculated concept parameters.

2. A method according to claim 1, wherein the method of adapting is triggered periodically.

3. A method according to claim 1 or 2, wherein the predetermined period of time is determined according to when the concept parameter is calculated and when the concept first became a potential interest to the user.

4. A method according to any preceding claim, wherein calculating comprises calculating the following equation:

$$P_c = N_{occ_c} / (D - d_c)$$

   Where: Pc is the concept parameter;
   $N_{occ}$ is the number of occurrences of the concept in the provided information (consumed content);
   D is the time at which the user profile adaptation method is triggered;
   dc is the date of first appearance of the conceptas a potential interest to the user.

5. A method according to any preceding claim, wherein adapting comprises:

   removing a user preference from the user profile based on the calculated concept parameter for the concept associated with the user preference.

6. A method according to any preceding claim, wherein adapting comprises:

   removing a user preference from the user profile when the calculated concept parameter for the concept associated with the user preference is less than a predetermined value.

7. A method according to any preceding claim, wherein the user profile has a predetermined size limit for holding user preferences, wherein when a new user preference is to be added to the user profile and the number of user preferences has reached the predetermined size limit, adapting comprises removing the user preference from the user profile having a calculated concept parameter for the concept associated with the user preference with a lowest value.

8. A method according to any one of claims 1-4, wherein adapting comprises:

   adding a user preference to the user profile based on the calculated concept parameter for the concept associated with the user preference.

9. A method according to any one of claims 1-4, wherein adapting comprises:

   adding a user preference to the user profile when the calculated concept parameter for the concept associated with the user preference is greater than a predetermined value.

10. A method according to any one of claims 1-4, wherein adapting comprises:

calculating a weight of a user preference in the user profile based on the calculated concept parameter for the concept associated with the user preference.

**11.** A method according to any one of claims 1-4, wherein adapting comprises:

calculating a weight of a user preference in the user profile using the following factor $\dfrac{\Delta Pc}{\Delta t}$ ,

where Pc is the concept parameter.

**12.** A method according to any one of claims 1-4, wherein adapting comprises:

calculating a weight of a user preference in the user profile using the following:

$$\left| w'_{new} = w_{new} + \lambda \cdot \frac{\Delta Pc}{\Delta t} = w_{old} + fd * ContentRating * e^{-\beta * x * y} * \log \frac{time}{length} + \lambda \cdot \frac{\Delta Pc}{\Delta t} \right| \quad (3)$$

Where:

Pc is the concept parameter;
$\lambda$ is a positive constant;
$w_{old}$ is a factor representing the current weight of the concept associated with the user preference;
fd is a relevance feedback factor given through an analysis of content consumption;
ContentRating is the rank assigned to the content;

$\log \dfrac{time}{length}$ is an element incorporating the time spent consuming content in seconds and the length of the content in seconds;
$e^{-\beta * x * y}$ is a factor which is used to follow the non-linear change of the concept's weight according to user usage history data;
$x$ represents the mean number of content that the user is consuming per update period;
$y$ represents the number of consumed content;
$\beta$ is a positive constant.

**13.** A method according to any one of claims 1-4, wherein adapting comprises:

leaving a user preference in the user profile unchanged based on the calculated concept parameter for the concept associated with the user preference.

**14.** A communication device for operating in a communication system comprising:

a receiver for receiving information relating to a user including concept information identifying concepts that have been provided in information to the user; and
processing arrangement for calculating a concept parameter for each concept in the provided information, the concept parameter relating to the number of occurrences of the concept in the provided information over a predetermined period of time and for adapting the user profile for the user based on the calculated concept parameters.

**15.** A communication device according to claim 14, wherein the predetermined period of time is determined according to when the concept parameter is calculated and when the concept first became a potential interest to the user.

**16.** A communication device according to claim 14 or 15, wherein the processing arrangement is arranged to remove a user preference from the user profile or add a user preference to the user profile based on the calculated concept parameter for the concept associated with the user preference.

17. A communication device according to claim 14 or 15, wherein the processing arrangement is arranged to calculate a weight of a user preference in the user profile based on the calculated concept parameter for the concept associated with the user preference.

18. A communication device according to claim 14, or 15, wherein the processing arrangement is arranged to calculate a weight of a user preference in the user profile using the following factor $\dfrac{\Delta Pc}{\Delta t}$ ,

where Pc is the concept parameter.

FIG. 1

FIG. 2

FIG. 3

EP 2 083 385 A1

FIG. 4

EP 2 083 385 A1

```
              ┌─────────────────────┐
              │   Trigger user profile │
              │   adaptation method    │
              └─────────────────────┘
         500            │
                        ▼
              ┌─────────────────────┐
              │   Calculate concept    │
              │   parameter Pc for     │
              │   provided information │
         502  └─────────────────────┘
                        │
                        ▼
              ┌─────────────────────┐
              │   Adapt user profile   │
              │   based on calculated  │
         504  │   concept parameter    │
              │         Pc             │
              └─────────────────────┘
```

FIG. 5

FIG. 7

FIG. 6

FIG. 8

FIG. 9

Ratio x/y
Concept weight (constant content consumption)
Concept weight (increase of content consumption)

FIG. 10

Ratio x/y
Concept weight (constant content consumption)
Concept weight (increase of content consumption)

FIG. 11

FIG. 12

FIG. 13

FIG. 14

# EP 2 083 385 A1

**European Patent Office**

## EUROPEAN SEARCH REPORT

Application Number

EP 08 29 0033

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application (Art. 92 EPC) are considered part of common general knowledge. Due to their notoriety no documentary evidence is found to be required. For further details see the accompanying Opinion and the reference below.<br>XP002456252<br><br>----- | 1-18 | INV.<br>G06Q30/00 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 28 May 2008 | Peller, Ingrid |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Hybrid User Model for News Story Classification. **D. BILLSUS ; M. J. PAZZANI.** Proceedings of the 7th International Conference on User Modeling. Springer-Verlag, 1999, 99-108
- **J. LU ; J. CALLAN.** User Modeling for Full-Text Federated Search in Peer-to-Peer Networks. *proceedings of SIGIR '06,* 06 August 2006
- **YI DING ; XUE LI.** Time Weight Collaborative Filtering. *Proceedings of the 14th ACM International Conference on Information and knowledge management,* 2005, http://delivery.acm.org/10.1145/1100-000/1099689/p485-ding.pdf